# FASCICULE DE BREVET EUROPEEN

(11) **EP 3 811 279 B1**
(45) Date de publication et mention de la délivrance du brevet: **26.04.2023**
(21) Numéro de dépôt: 19791313.0
(22) Date de dépôt: 24.07.2019
(51) Int. Cl.: G06K 7/10, G06K 17/00, G06K 7/00, F01D 25/00

(54) **SYSTÈME DE CONTRÔLE DE PIÈCES D'UN TURBORÉACTEUR PAR IDENTIFICATION RADIOFRÉQUENCE**
SYSTEM ZUR INSPEKTION VON KOMPONENTEN EINES TURBOSTRAHLTRIEBWERKS MITTELS HOCHFREQUENZ-IDENTIFIZIERUNG
SYSTEM FOR INSPECTING COMPONENTS OF A TURBOJET ENGINE USING RADIOFREQUENCY IDENTIFICATION

(30) Priorité: 31.07.2018 FR 1857169
(43) Date de publication de la demande: 28.04.2021
(73) Titulaire: SAFRAN AIRCRAFT ENGINES, 75015 Paris (FR)
(72) Inventeur: LHOMMEAU, Tony, Alain, Roger, Joël, 77550 Moissy-Cramayel (FR); BASTARD, Guillaume Philippe Camille, 77550 Moissy-Cramayel (FR); MOUTON, Hervé Jean Albert, 77550 Moissy-Cramayel (FR); CANTEAU, Philippe Roger Jacques, 77550 Moissy-Cramayel (FR)
(74) Mandataire: Brevalex
(86) Numéro de dépôt international: PCT/FR2019/051834
(87) Numéro de publication internationale: WO 2020/025882

(56) Documents cités:
- EP-A1- 2 224 379
- US-A1- 2007 018 793
- US-A1- 2007 114 280
- US-A1- 2008 125 950
- US-A1- 2010 019 882
- US-A1- 2011 280 279

## Description

### DOMAINE TECHNIQUE

L'invention se situe dans le domaine de la maintenance des aéronefs et, plus précisément, dans le domaine du suivi des pièces montées dans un turboréacteur. Elle concerne un système et un procédé de contrôle de pièces d'un turboréacteur, pour lesquels le contrôle s'effectue au moyen d'un dispositif interrogateur agencé pour pouvoir communiquer avec des étiquettes RFID associées auxdites pièces.

### ÉTAT DE LA TECHNIQUE ANTÉRIEURE

La maintenance d'un aéronef implique dans certaines situations d'identifier les pièces équipant un turboréacteur. Cette identification repose sur des informations relatives aux pièces telles que le numéro de série, le numéro de pièce ou la date d'installation de la pièce. De manière conventionnelle, ces informations sont adjointes aux pièces équipant un turboréacteur par gravure de ces pièces ou par fixation d'une plaque d'identification. Après l'intégration des pièces dans le turboréacteur, la lecture des informations peut être difficile voire impossible sans démontage de ces pièces ou des pièces environnantes. En outre, les pièces d'un turboréacteur sont logées dans une nacelle et ne sont accessibles qu'après ouverture d'un capot. Une règlementation stricte encadre les interventions sur un turboréacteur et notamment l'ouverture de ces capots nacelle. Il est en particulier nécessaire de suivre un protocole spécifique impactant de manière négative la durée d'intervention. De plus, l'ouverture des capots nacelle peut être empêchée par des vents forts, rendant impossible l'identification des pièces.

Une solution permettant d'accéder à des informations relatives aux pièces équipant un turboréacteur sans avoir à ouvrir de capot nacelle consiste à équiper les pièces d'étiquettes RFID contenant ces informations. Le passage d'un lecteur interrogateur au voisinage des étiquettes RFID permet de récolter les informations. L'échange de données est réalisé au moyen d'ondes électromagnétiques à des fréquences comprises entre environ 100 kHz (kilohertz) et quelques gigahertz. Un signal radiofréquence d'interrogation est d'abord émis par le lecteur interrogateur vers chacune des étiquettes RFID. Chaque étiquette RFID située dans un voisinage suffisamment proche du lecteur interrogateur pour recevoir le signal radiofréquence d'interrogation réémet à destination du lecteur interrogateur un signal radiofréquence de réponse contenant les informations contenues dans une puce de l'étiquette RFID. Cette solution basée sur la radio-identification permet d'accéder facilement et rapidement aux informations associées à une pluralité de pièces d'un turboréacteur, y compris lorsque ces pièces sont entourées d'autres pièces dans un environnement dense. Elle est notamment décrite dans la demande de brevet EP 3 196 425 A1 comme solution pour communiquer à un appareil mobile externe à l'aéronef une information relative à un niveau d'huile dans une turbomachine. Néanmoins, l'échange de signaux électromagnétiques entre des pièces d'un turboréacteur et l'extérieur est fortement perturbé par la paroi de la nacelle enveloppant le turboréacteur. Cette paroi est généralement composée d'une structure multicouche au moins partiellement conductrice électriquement. Elle est par exemple formée par une première couche de composite carbone, une deuxième couche en nid d'abeille, une troisième couche de composite carbone et une quatrième couche en mailles de bronze. La paroi de la nacelle forme alors une cage de Faraday avec un affaiblissement de l'ordre de 40 à 80 dB. Cette barrière électromagnétique pourrait éventuellement être franchie en augmentant fortement la puissance des signaux échangés entre le lecteur interrogateur et les puces RFID. Toutefois, cette puissance doit être limitée en raison du risque d'interférences avec d'autres équipements de l'aéronef voire avec des équipements d'autres aéronefs.

Le document US 2011/280279 A1 décrit un système de mesure de température par liaison sans fil pour environnement sévère. Il peut être appliqué à la mesure de température au sein d'un turboréacteur, notamment sur une aube. Le système de mesure comprend un émetteur, un capteur de température et un récepteur. Le capteur comprend une antenne, une couche diélectrique et une diode. La couche diélectrique est disposée sur un substrat pouvant notamment être une aube de turbine. Elle présente une constante diélectrique variable en fonction de la température. Pour une mesure de température, l'émetteur envoie un signal d'interrogation au capteur. La composante de ce signal à la fréquence de résonnance de l'ensemble formé de l'antenne et de la couche diélectrique est réémise par l'antenne avec les harmoniques de cette fréquence. Le récepteur reçoit ce signal de réponse et détermine la température d'après la fréquence de résonance.

Le document US 2008/125950 A1 décrit un dispositif de stockage de données pour une turbomachine pouvant être monté sur un capot du coeur d'une turbomachine. Il comprend un boîtier, une mémoire et une interface. L'interface peut être sans fil et comprendre un émetteur, un récepteur et une antenne pour permettre au dispositif de stockage de données de communiquer avec un périphérique externe ou des pièces de la turbomachine.

Le document EP 2224379 A1 décrit un système de surveillance des aubes d'une turbomachine comprenant des étiquettes RFID montées sur les aubes et un lecteur RFID monté à l'intérieur de la turbomachine, à proximité des aubes afin de pouvoir communiquer avec les étiquettes RFID.

Le document US 2007/114280 A1 décrit un système d'identification de composants d'un aéronef et de suivi de maintenance par identification radiofréquence. Le système comprend des étiquettes RFID positionnées sur l'aéronef, par exemple sur un siège ou sur un composant du moteur, et un lecteur portatif.

Le document US 2007/018793 A1 décrit un système RFID permettant d'interroger des étiquettes RFID situées à différentes distances en évitant les interférences. Pour ce faire, le lecteur RFID émet successivement des signaux d'interrogation avec une puissance croissante. Après réception de ce signal d'interrogation, les étiquettes RFID se mettent en veille pour éviter d'interférer avec les étiquettes plus éloignées.

Le document US 2010/019882 A1 décrit un lecteur RFID comprenant, en plus d'un module RFID avec son antenne, un dispositif d'éclairage illuminant le champ de vision du module RFID et un capteur optique permettant d'acquérir une image de ce champ de vision. L'illumination du champ de vision permet à l'utilisateur de savoir si des étiquettes RFID sont présentes.

Compte tenu de ce qui précède, l'invention a pour objectif de fournir une solution permettant d'identifier facilement des pièces d'un turboréacteur et éventuellement d'obtenir des informations relatives à ces pièces sans avoir à démonter une partie du turboréacteur et même sans avoir à ouvrir un capot de nacelle. L'invention a encore pour objectif de fournir un dispositif dont les coûts de conception, de fabrication et de maintenance sont compatibles avec une utilisation à échelle industrielle.

### EXPOSÉ DE L'INVENTION

À cet effet, l'invention repose sur la technologie de radio-identification, également appelée technologie RFID d'après l'expression anglo-saxonne « radio frequency identification », avec utilisation d'un lecteur interrogateur comportant une antenne agencée pour pouvoir être inséré dans la nacelle d'un turboréacteur sans nécessiter une ouverture de capot. Une nacelle d'aéronef comporte en effet de manière classique une ou plusieurs ouvertures d'inspection prévues pour le passage d'une sonde d'endoscope et permettant une inspection visuelle du turboréacteur.

Plus précisément, l'invention a pour objet un système de contrôle de pièces d'un turboréacteur, le turboréacteur étant logé dans un compartiment de nacelle délimité par une paroi de nacelle, la paroi de nacelle comportant une ouverture d'inspection apte à permettre le passage d'une sonde d'endoscope, le turboréacteur comportant au moins une pièce équipée d'une étiquette RFID, le système de contrôle comprenant un dispositif interrogateur équipé d'une antenne RFID, le dispositif interrogateur étant agencé pour pouvoir communiquer avec l'étiquette RFID par l'intermédiaire de l'antenne RFID, l'antenne RFID étant agencée pour pouvoir être introduite dans le compartiment de nacelle par l'ouverture d'inspection.

La communication entre un dispositif interrogateur, également appelé « lecteur RFID », et une étiquette RFID implique de manière conventionnelle la transmission, du dispositif interrogateur vers l'étiquette RFID, d'un signal radiofréquence d'interrogation et la transmission, de l'étiquette RFID vers le dispositif interrogateur, d'un signal radiofréquence de réponse encodant des informations contenues dans une puce électronique de l'étiquette RFID. Les signaux radiofréquences présentent par exemple des fréquences dans une plage comprise entre 860 MHz (mégahertz) et 960 MHz. La technologie RFID peut être passive, active ou semi-active. Une étiquette RFID de technologie passive est uniquement alimentée par induction via le signal électromagnétique émis par le dispositif interrogateur. Ce signal permet à la fois d'alimenter l'étiquette RFID et de lui transmettre une requête pour l'envoi des informations contenues dans une puce électronique de l'étiquette RFID. Une étiquette RFID de technologie active est équipée ou associée à une pile lui permettant de fournir l'énergie nécessaire à l'envoi d'un signal contenant les informations de la puce électronique. Une étiquette RFID de technologie semi-active est également équipée ou associée à une pile ; toutefois, l'énergie fournie par la pile est uniquement utilisée pour le stockage d'informations dans la puce électronique, et non pour l'émission du signal contenant ces informations.

Selon une première branche de l'invention, le système de contrôle comprend, en outre, une étiquette RFID de positionnement disposée dans le compartiment de nacelle de sorte à pouvoir être repérée par le dispositif interrogateur lorsque l'antenne RFID est introduite dans le compartiment de nacelle par l'ouverture d'inspection. Le système de contrôle est alors configuré pour autoriser le dispositif interrogateur à émettre un signal radiofréquence d'interrogation avec une puissance inférieure ou égale à un premier seuil lorsqu'il n'a pas repéré l'étiquette RFID de positionnement et pour autoriser le dispositif interrogateur à émettre un signal radiofréquence d'interrogation avec une puissance supérieure ou égale à un deuxième seuil lorsqu'il a repéré l'étiquette RFID de positionnement. Le deuxième seuil est strictement supérieur au premier seuil. De préférence, le dispositif interrogateur et l'étiquette RFID de positionnement sont agencés de manière à ce que l'étiquette RFID de positionnement ne puisse être repérée par le dispositif interrogateur que lorsque l'antenne RFID est introduite dans le compartiment de nacelle. Typiquement, le dispositif interrogateur repère l'étiquette RFID de positionnement lorsqu'il reçoit un signal radiofréquence de réponse de sa part. L'étiquette RFID de positionnement forme ainsi un marqueur de positionnement et le dispositif interrogateur un capteur de positionnement.

Le premier seuil peut être compris entre 50 mW et 2 W. Il est de préférence égal à 500 mW afin de limiter le risque d'interférences avec d'autres signaux électromagnétiques.

Le deuxième seuil peut être déterminé de manière à ce que, en dehors du compartiment de nacelle, après atténuation par la paroi de nacelle, le signal radiofréquence d'interrogation présente une puissance inférieure ou égale au premier seuil. Le signal radiofréquence d'interrogation atténué par la paroi de nacelle peut ainsi présenter une puissance comprise entre 50 mW et 2 W, de préférence inférieure ou égale à 500 mW. Le deuxième seuil est par exemple compris entre 2 W et 10 W. En traversant la paroi de nacelle avec un affaiblissement de l'ordre de 40 dB à 80 dB, le signal radiofréquence d'interrogation présente alors une puissance nettement inférieure à 2 W en dehors du compartiment de nacelle.

Selon une deuxième branche de l'invention, le système de contrôle comprend, en outre, un marqueur de positionnement et un capteur de positionnement agencés de sorte que le marqueur de positionnement soit repéré par le capteur de positionnement lorsque l'antenne RFID est introduite dans le compartiment de nacelle par l'ouverture d'inspection. Le système de contrôle est alors configuré pour n'autoriser le dispositif interrogateur à émettre un signal radiofréquence d'interrogation avec une puissance supérieure ou égale à un seuil prédéterminé que lorsque le capteur de positionnement a repéré le marqueur de positionnement. De préférence, le marqueur de positionnement et le capteur de positionnement sont agencés de sorte que le marqueur de positionnement ne puisse être repéré par le capteur de positionnement que lorsque l'antenne RFID est introduite dans le compartiment de nacelle par l'ouverture d'inspection.

Selon une forme particulière de réalisation, le seuil prédéterminé présente une valeur nulle. Autrement dit, aucun signal radiofréquence d'interrogation ne peut être émis avant que le capteur de positionnement n'ait repéré le marqueur de positionnement. Le système de contrôle est alors configuré pour n'autoriser le dispositif interrogateur à émettre un signal radiofréquence d'interrogation que lorsque le capteur de positionnement a repéré le marqueur de positionnement.

Selon une autre forme particulière de réalisation, le seuil prédéterminé est déterminé de manière à ce que, en dehors du compartiment de nacelle, après atténuation par la paroi de nacelle, le signal radiofréquence d'interrogation présente une puissance inférieure ou égale à 2 W, de préférence inférieure ou égale à 500 mW. Le seuil prédéterminé est par exemple compris entre 2 W et 10 W.

Différentes technologies peuvent être utilisées pour réaliser le capteur de positionnement et le marqueur de positionnement. En particulier, le marqueur de positionnement peut être un code-barres, également appelé « code à barres », ou un code 2D tel qu'un flash code ou un QR code (marques déposées). Le capteur de positionnement est alors un lecteur optique apte à lire un code-barres ou un code 2D. Le code-barres et le lecteur optique permettent d'identifier une ouverture d'inspection et d'informer le dispositif interrogateur qu'il se trouve en présence de l'ouverture d'inspection appropriée.

Le code-barres ou le code 2D est avantageusement disposé sur une surface externe de la paroi de nacelle, à proximité de l'ouverture d'inspection, le lecteur optique étant disposé au voisinage de l'antenne RFID. Une telle disposition permet à la fois d'assurer une relation biunivoque entre chaque ouverture d'inspection et un code-barres ou un code 2D et d'assurer que l'antenne RFID soit introduite dans l'ouverture d'inspection correspondante.

Dans chacune des branches de l'invention, le système de contrôle peut comporter une unité de commande agencée pour gérer les autorisations à émettre pour le dispositif interrogateur. En particulier, l'unité de commande peut être agencée pour déterminer la puissance à laquelle le dispositif interrogateur est autorisé à émettre. Selon la première branche de l'invention, l'unité de commande est alors connectée au dispositif interrogateur, de manière à pouvoir recevoir un signal radiofréquence de réponse de l'étiquette RFID de positionnement et autoriser en conséquence une émission à une puissance supérieure ou égale au deuxième seuil. Selon la deuxième branche de l'invention, l'unité de commande est connectée au capteur de positionnement, de manière à pouvoir recevoir un signal indiquant que le capteur de positionnement a repéré le marqueur de positionnement. Dans ce cas, le dispositif interrogateur est autorisé à émettre à une puissance supérieure ou égale au seuil prédéterminé.

Le système de contrôle peut de plus comporter un interrupteur, par exemple sous forme d'un bouton poussoir, relié à l'unité de commande. L'unité de commande peut alors être configurée de manière à ce que l'actionnement de l'interrupteur déclenche une vérification préalable de l'autorisation à émettre et, le cas échéant, l'émission d'un signal radiofréquence d'interrogation avec une puissance supérieure ou égale au deuxième seuil ou au seuil prédéterminé.

Selon une forme particulière de réalisation, l'unité de commande est agencée de manière à déterminer à intervalles de temps régulier si le dispositif interrogateur est autorisé ou non à émettre à une puissance supérieure ou égale au deuxième seuil ou au seuil prédéterminé.

Le dispositif interrogateur peut être monté sur un boîtier de manière à former un appareil de contrôle portatif. L'antenne RFID doit être agencée de manière à s'étendre en dehors du boîtier et à pouvoir être introduite dans une ouverture d'inspection. L'appareil de contrôle comporte en outre, le cas échéant, l'unité de commande et/ou le capteur de positionnement. Il peut comporter, de plus, une batterie et un afficheur. La batterie permet d'alimenter l'ensemble des composants de l'appareil portatif et de le rendre autonome. L'afficheur permet par exemple d'afficher les informations contenues dans les étiquettes RFID entrées en communication avec le dispositif interrogateur. Il peut en outre afficher une information relative au repérage du marqueur de positionnement ou de l'étiquette RFID de positionnement.

Selon une forme particulière de réalisation, l'étiquette RFID contient une information relative à une identification de la pièce qu'elle équipe, une information relative à la durée de vie de ladite pièce et/ou une information relative à la présence d'une substance particulière dans ladite pièce. L'étiquette RFID peut notamment contenir un numéro de série, un numéro de produit, une durée de vie estimée de la pièce, une date de remplacement prévu de la pièce, et/ou une information relative à la présence d'une substance dangereuse ou toxique.

L'antenne RFID est agencée pour pouvoir être introduite dans le compartiment de nacelle par une ouverture d'inspection. Elle présente ainsi des dimensions, et notamment une section, lui permettant de traverser la paroi de nacelle par l'ouverture d'inspection.

Le compartiment de nacelle peut comporter des zones autorisées, dans lesquelles l'antenne RFID est autorisée à être introduite, et des zones interdites, dans lesquelles l'antenne RFID n'est pas autorisée à être introduite. Une zone est de préférence définie comme autorisée de manière à autoriser l'interrogation d'un ensemble d'étiquettes RFID, voire de l'ensemble des étiquettes RFID équipant le turboréacteur. Une zone peut être définie comme interdite lorsqu'il existe un risque de dégradation de l'antenne RFID ou d'un composant du moteur en cas de contact de l'un avec l'autre. En particulier, une zone interdite peut correspondre à un coeur du turboréacteur, lequel est susceptible d'être porté à une température élevée. Afin d'éviter l'introduction de l'antenne RFID dans une zone interdite, l'antenne RFID peut présenter une longueur inférieure à une distance séparant l'ouverture d'inspection de la zone interdite.

Selon une forme particulière de réalisation, l'antenne RFID est une antenne omnidirectionnelle. Elle est par exemple constituée d'une antenne quart d'onde présentant un brin rayonnant apte à être introduit dans l'ouverture d'inspection. Le brin rayonnant présente typiquement une forme cylindrique de révolution. Le diamètre du brin rayonnant est alors inférieur au diamètre de l'ouverture d'inspection ou, le cas échéant, au diamètre d'un cercle inscrit dans l'ouverture d'inspection.

L'antenne RFID est par exemple agencée pour émettre et recevoir des signaux radiofréquences dans une plage de fréquences UHF comprise entre 860 MHz et 960 MHz.

Il est à noter que le système de contrôle de pièces est adapté au contrôle simultané d'une pluralité de pièces équipées chacune d'une étiquette RFID. L'antenne RFID peut être introduite une seule fois dans le compartiment de nacelle afin de récupérer les informations contenues dans plusieurs étiquettes RFID. Afin de limiter les risques de collision entre les signaux radiofréquences de réponse émis par plusieurs étiquettes RFID, le système de contrôle peut intégrer un mécanisme de gestion de collision. Ce mécanisme consiste par exemple en un algorithme de gestion de collision intégré dans le dispositif interrogateur.

L'invention a également pour objet un procédé de contrôle de pièces d'un turboréacteur, le turboréacteur étant logé dans un compartiment de nacelle délimité par une paroi de nacelle, la paroi de nacelle comportant une ouverture d'inspection apte à permettre le passage d'une sonde d'endoscope, le turboréacteur comportant au moins une pièce équipée d'une étiquette RFID. Selon l'invention, le procédé de contrôle comprend :
▪ une étape d'introduction, dans l'ouverture d'inspection, d'une antenne RFID équipant un dispositif interrogateur apte à communiquer avec l'étiquette RFID,
▪ une étape de vérification que l'antenne RFID est introduite dans l'ouverture d'inspection, et
▪ si l'antenne RFID est effectivement introduite dans l'ouverture d'inspection, une étape d'émission d'un signal radiofréquence d'interrogation avec une puissance supérieure ou égale à un seuil prédéterminé.

L'étape de vérification comporte par exemple une sous-étape d'émission, par le dispositif interrogateur, d'un signal radiofréquence d'interrogation avec une puissance inférieure ou égale à un premier seuil, une sous-étape de réception de ce signal par une étiquette RFID de positionnement disposée dans le compartiment de nacelle, à proximité de l'ouverture d'inspection, une sous-étape de traitement du signal et d'émission d'un signal radiofréquence de réponse par l'étiquette RFID de positionnement, et une sous-étape de réception du signal radiofréquence de réponse par le dispositif interrogateur. L'antenne RFID est alors considérée comme étant effectivement introduite dans l'ouverture d'inspection lorsque le dispositif interrogateur reçoit le signal radiofréquence de réponse de l'étiquette RFID de positionnement. Le premier seuil est strictement inférieur au seuil prédéterminé, également appelé deuxième seuil, de sorte que le signal radiofréquence d'interrogation émis lors de l'étape de vérification présente une puissance strictement inférieure à celle du signal radiofréquence d'interrogation émis après reconnaissance de l'introduction de l'antenne RFID.

Le seuil prédéterminé peut notamment être déterminé de manière à ce que, en dehors du compartiment de nacelle, après atténuation par la paroi de nacelle, le signal radiofréquence d'interrogation présente une puissance inférieure ou égale au premier seuil, par exemple inférieure ou égale à 2 W, de préférence inférieure ou égale à 500 mW. Le seuil prédéterminé est par exemple compris entre 2 W et 10 W.

L'invention a encore pour objet un moteur d'aéronef selon les revendications 13 et 14.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente schématiquement un premier exemple de système de contrôle de pièces d'un turboréacteur selon l'invention ;
- la figure 2 représente schématiquement un premier exemple de système de contrôle de pièces d'un turboréacteur selon l'invention ;
- la figure 3 représente schématiquement, dans une vue en coupe transversale, un turboréacteur d'aéronef équipé du système de contrôle décrit en référence à la figure 1 ;
- la figure 4 représente un exemple de procédé de contrôle de pièces d'un turboréacteur selon l'invention.

### EXPOSÉ DÉTAILLÉ DE MODES DE RÉALISATION PARTICULIERS

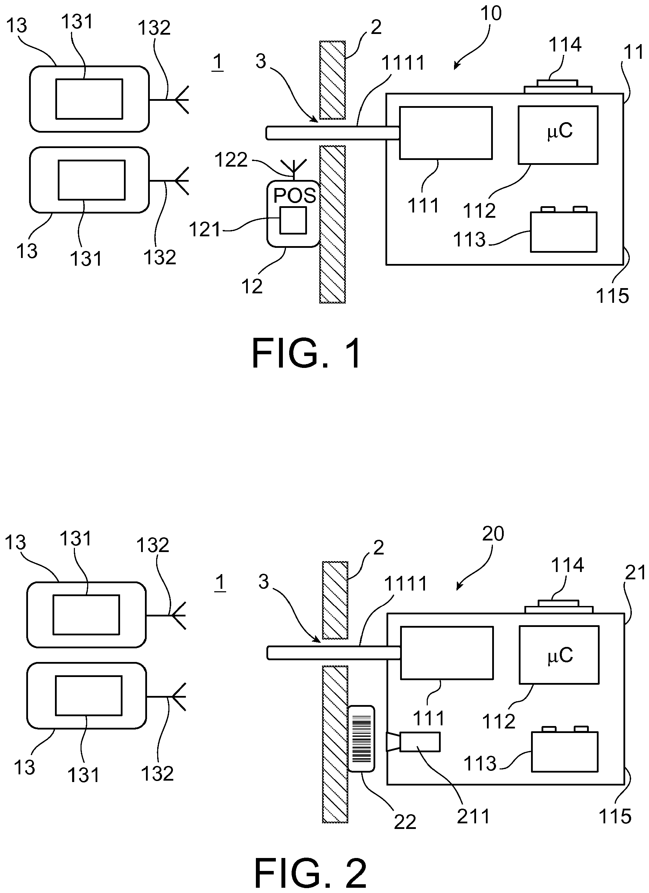

La figure 1 représente schématiquement un premier exemple de système de contrôle de pièces d'un turboréacteur selon l'invention. Le turboréacteur comprend un ensemble de pièces et/ou de composants, non représentés, disposés dans un compartiment de nacelle 1. Ce compartiment de nacelle 1 est délimité par une paroi de nacelle 2. La paroi de nacelle 2 comporte une ou plusieurs ouvertures d'inspection 3 chacune apte à permettre le passage d'une sonde d'endoscope. Une ouverture d'inspection 3 comporte par exemple un orifice débouchant de part et d'autre de la paroi de nacelle, de manière à pouvoir faire communiquer le compartiment de nacelle avec l'extérieur. Chaque ouverture d'inspection peut comporter, en outre, un clapet pouvant prendre une position ouverte et une position fermée.

Le système de contrôle 10 comprend un appareil de contrôle 11, une étiquette RFID de positionnement 12 et un ensemble d'étiquettes RFID 13. L'étiquette RFID de positionnement 12 est associée à une ouverture d'inspection 3. Elle est disposée dans le compartiment de nacelle 1, à proximité de l'ouverture d'inspection 3. L'étiquette RFID de positionnement 12 comprend une puce électronique 121 et une antenne 122. La puce électronique 121 contient des informations relatives à l'ouverture d'inspection 3, par exemple un numéro d'identification de l'ouverture d'inspection. Chaque étiquette RFID 13 est associée à une pièce ou à un composant du turboréacteur. Elle est par exemple collée, soudée ou autrement fixée à la pièce ou au composant. Elle comprend une puce électronique 131 contenant des informations relatives à la pièce ou au composant auquel elle est associée et une antenne 132. Les informations relatives à la pièce ou au composant portent par exemple sur une identification de la pièce, sur sa durée de vie ou sur le fait qu'elle contient une ou plusieurs substances dangereuses ou toxiques. L'appareil de contrôle 11 comprend un dispositif interrogateur 111, une unité de commande 112, une batterie 113, un interrupteur 114 et un boîtier 115. Le dispositif interrogateur 111, également appelé « lecteur RFID », comprend une antenne RFID 1111 et est agencé pour pouvoir communiquer avec l'étiquette RFID de positionnement 12 et les étiquettes RFID 13. En particulier, il est agencé pour pouvoir émettre un signal radiofréquence (RF) d'interrogation apte à déclencher l'émission, par chaque étiquette RFID 12, 13 ayant reçu ce signal, d'un signal RF de réponse encodant les informations contenues dans sa puce électronique 121, 131. L'unité de commande 112 est configurée pour déterminer le niveau de puissance du signal RF d'interrogation pouvant être émis par le dispositif interrogateur 111 en fonction de la réception du signal RF de réponse de l'étiquette RFID de positionnement 12. Lorsque l'appareil de contrôle 11 n'a pas reçu de signal RF de réponse de l'étiquette RFID de positionnement 12, l'unité de commande 112 limite la puissance du signal RF d'interrogation émis par le dispositif interrogateur 111. La puissance du signal est par exemple fixée à 100 mW ou à 200 mW. Après réception du signal RF de réponse de l'étiquette RFID de positionnement 12, l'unité de commande autorise une puissance de signal plus élevée, par exemple égale à 1 W ou 2 W. La batterie 113 est agencée pour pouvoir alimenter les différents éléments de l'appareil de contrôle 11, en particulier le dispositif interrogateur 111 et l'unité de commande 112. Elle permet de rendre autonome l'appareil de contrôle 11. L'interrupteur 114 est relié à l'unité de commande 112. Il permet de déclencher une interrogation des étiquettes RFID 12, 13, c'est-à-dire l'émission d'un signal RF d'interrogation. Le boîtier 115 est agencé pour supporter l'ensemble des éléments de l'appareil de contrôle 11.

Selon une particularité de l'invention, l'antenne RFID 1111 du dispositif interrogateur 111 est agencée pour pouvoir être introduite dans le compartiment de nacelle 1 par l'ouverture d'inspection 3. L'antenne RFID 1111 comporte par exemple un brin rayonnant formant un cylindre de révolution dont le diamètre est inférieur au diamètre de l'orifice de l'ouverture d'inspection. La paroi de nacelle 2 présente généralement une structure au moins partiellement conductrice, de sorte que les signaux RF la traversant sont considérablement atténués. Ainsi, lorsque l'antenne RFID 1111 est positionnée hors du compartiment de nacelle 1, un signal RF d'interrogation n'est normalement pas détecté par l'étiquette RFID de positionnement 12 et le dispositif interrogateur 111 ne reçoit aucun signal RF de réponse. En revanche, lorsque l'antenne RFID 1111 est insérée dans le compartiment de nacelle 1, le signal RF d'interrogation est facilement détecté par l'étiquette RFID de positionnement 12, qui réémet en retour un signal RF de réponse qui est détecté par le dispositif interrogateur 111. Le système de contrôle 10 est ainsi agencé de sorte à ce que l'appareil de contrôle 11 puisse déterminer si l'antenne RFID 1111 est insérée ou non dans le compartiment de nacelle 1. Lorsque l'antenne RFID 1111 n'est pas insérée, le dispositif interrogateur 111 est uniquement autorisé à émettre un signal RF de puissance relativement faible et les risques d'interférences avec d'autres dispositifs, par exemple des équipements de l'aéronef équipé du turboréacteur ou des équipements d'un autre aéronef, sont limités. Lorsque l'antenne RFID 1111 est insérée dans le compartiment de nacelle 1, le dispositif interrogateur 111 est alors autorisé à émettre un signal RF de plus forte puissance. Ce signal RF permet d'atteindre des étiquettes RFID relativement éloignées de l'ouverture d'inspection 3 ou masquées par des pièces qui atténuent le signal. Les risques d'interférence restent encore limités du fait que le signal RF d'interrogation est fortement atténué par la paroi de nacelle 2.

La figure 2 représente schématiquement un deuxième exemple de système de contrôle de pièces d'un turboréacteur selon l'invention. Ce système de contrôle 20 est également adapté à équiper un turboréacteur d'un aéronef comprenant un ensemble de pièces et/ou de composants disposés dans un compartiment de nacelle 1. Le compartiment de nacelle 1 est délimité par une paroi de nacelle 2 muni d'une ouverture d'inspection 3. Le système de contrôle 20 se distingue de celui de la figure 1 en ce qu'il est agencé pour pouvoir déterminer si l'antenne RFID est insérée ou non dans le compartiment de nacelle 1 par un ensemble comprenant un code-barres et un lecteur de codes-barres. Le système de contrôle 20 comprend ainsi un appareil de contrôle 21, un code-barres 22 et un ensemble d'étiquettes RFID 13. Le code-barres 22 est associé à l'ouverture d'inspection 3. Il est disposé sur une surface externe de la paroi de nacelle 2, à proximité de l'ouverture d'inspection 3. Le code-barres 22 code une information relative à l'ouverture d'inspection 3, par exemple un numéro d'identification de l'ouverture d'inspection 3 ou une information selon laquelle l'ouverture d'inspection 3 peut être utilisée pour récolter des données d'étiquettes RFID disposées dans le compartiment de nacelle 1. Les étiquettes RFID 13 sont chacune associées à une pièce ou à un composant du turboréacteur et contiennent des informations relatives à ces pièces ou composants. L'appareil de contrôle 21 comprend un dispositif interrogateur 111 avec son antenne RFID 1111, une unité de commande 112, une batterie 113, un interrupteur 114 et un boîtier 115. Il comporte en outre un lecteur optique apte à lire des codes-barres. Ce lecteur optique est appelé « lecteur de codes-barres 211 » et est disposé à côté de l'antenne RFID 1111, de manière à pouvoir lire le code-barres 22 lorsque l'antenne RFID 1111 est insérée dans l'ouverture d'inspection 3. L'unité de commande 112 est configurée pour déterminer si le dispositif interrogateur 111 est autorisé ou non à émettre un signal RF d'interrogation en fonction de la lecture du code-barres 22. Lorsque le lecteur de codes-barres 211 n'a pas lu le code-barres 22, le dispositif interrogateur 111 n'est pas autorisé à émettre de signal RF d'interrogation. Une fois que le lecteur de codes-barres 211 a lu le code-barres 22, le dispositif interrogateur 111 est autorisé à émettre un signal RF d'interrogation. Dans la mesure où l'antenne RFID 1111 se situe alors dans le compartiment de nacelle 1, la puissance du signal RF d'interrogation peut être relativement élevée, par exemple égale à 1 W ou 2 W. L'interrupteur 114 est relié à l'unité de commande 112 et permet de déclencher dans un premier temps une lecture par le lecteur de codes-barres 211 et, en cas de lecture du code-barres 22, l'émission d'un signal RF d'interrogation à destination des étiquettes RFID 13.

Dans les exemples des figures 1 et 2, une seule ouverture d'inspection est représentée. Bien entendu, la paroi de nacelle peut comporter une pluralité d'ouvertures d'inspection chacune étant associée à une étiquette RFID de positionnement et/ou à un code-barres. Par ailleurs, le système de contrôle de pièces selon l'invention peut comporter un nombre quelconque d'étiquettes RFID associées à des pièces à contrôler. Il peut comporter une seule étiquette RFID ou plusieurs dizaines. Par ailleurs, l'appareil de contrôle peut comporter, en outre, un afficheur apte à afficher des informations relatives aux informations contenues dans les étiquettes RFID et/ou des moyens de communication filaires ou sans fil permettant de transmettre ces informations à un dispositif tiers, par exemple un ordinateur.

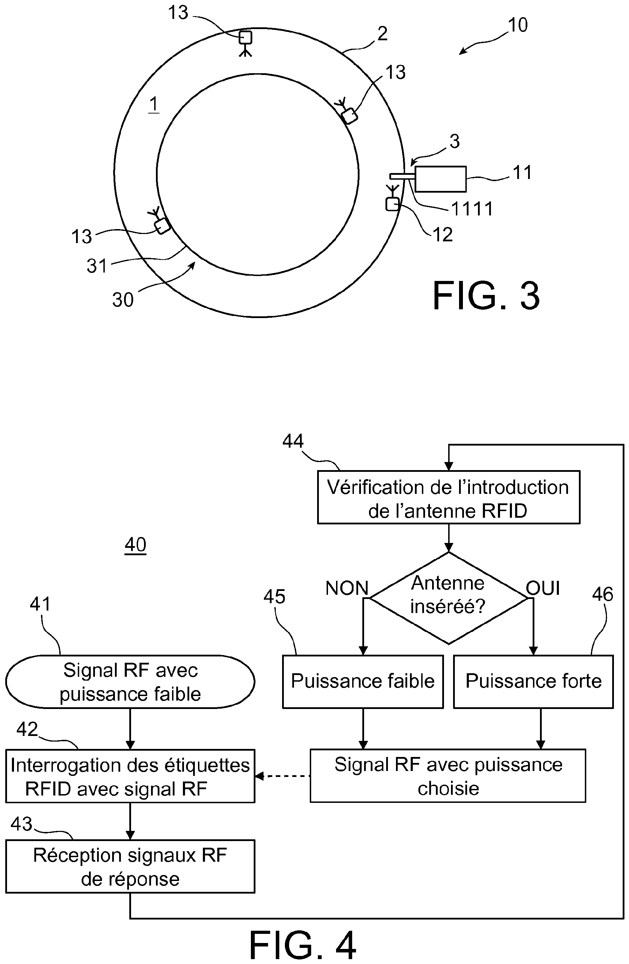

La figure 3 représente schématiquement, dans une vue en coupe transversale, un turboréacteur d'aéronef équipé du système de contrôle décrit en référence à la figure 1. Le turboréacteur 30 comporte un coeur 31 formé par un ensemble de pièces et de composants susceptibles d'être portés à des températures élevées. Le turboréacteur 30 est logé dans un compartiment de nacelle 1 comprenant une paroi de nacelle 2. Une ouverture d'inspection 3 est formée dans la paroi de nacelle 2. Le système de contrôle de pièces 10 comporte l'appareil de contrôle 11, l'étiquette RFID de positionnement 12 et trois étiquettes RFID 13. Les étiquettes RFID 13 sont disposées dans le compartiment de nacelle 1. L'étiquette RFID de positionnement 12 est également disposée dans le compartiment de nacelle 1 mais à proximité de l'ouverture d'inspection 3. Afin d'éviter à l'antenne RFID 1111 du dispositif interrogateur 111 d'entrer en contact avec le coeur 31 du turboréacteur 30, sa longueur est déterminée de manière à être inférieure à la distance séparant la paroi de nacelle 2 du coeur 31.

La figure 4 illustre des étapes d'un exemple de procédé de contrôle de pièces d'un turboréacteur selon l'invention. Le procédé est décrit en référence au système de contrôle de la figure 1. Le procédé de contrôle 40 comporte une étape d'initialisation 41 dans laquelle une puissance faible est affectée au signal RF d'interrogation. La puissance est par exemple fixée à 100 mW. Dans une deuxième étape 42, un signal RF d'interrogation est émis par le dispositif interrogateur 111. Le signal RF présente alors une puissance faible. La deuxième étape est par exemple déclenchée par actionnement de l'interrupteur 114. Dans une troisième étape 43, un signal RF de réponse est reçu en provenance de chacune des étiquettes RFID 12, 13 ayant reçu le signal RF d'interrogation. Dans une quatrième étape 44, il est vérifié si l'antenne RFID est insérée dans le compartiment de nacelle 1. Cette étape consiste à déterminer si un signal RF de réponse a été reçu de l'étiquette RFID de positionnement 12. Si ce signal n'a pas été reçu, la puissance faible reste affectée au signal RF d'interrogation. Cette affectation est représentée par une étape 45. Une nouvelle étape 42 d'émission d'un signal RF d'interrogation peut ensuite être exécutée afin de tenter une nouvelle communication avec la puce RFID de positionnement 12. Alternativement, il peut être mis fin au procédé. En revanche, si un signal RF de réponse a été reçu de l'étiquette RFID de positionnement 12, une puissance élevée, par exemple fixée à 1W, est affectée au signal RF d'interrogation dans une étape 46. Une nouvelle étape 42 d'émission d'un signal RF d'interrogation est ensuite exécutée afin de pouvoir interroger l'ensemble des étiquettes RFID 13 située dans le compartiment de nacelle 1. Les signaux RF de réponse peuvent alors être transmis à l'unité de commande 112 et, le cas échéant, à d'autres appareils.

## Revendications

1. Système de contrôle de pièces d'un turboréacteur, le turboréacteur (30) étant logé dans un compartiment de nacelle (1) délimité par une paroi de nacelle (2), la paroi de nacelle comportant une ouverture d'inspection (3) apte à permettre le passage d'une sonde d'endoscope, le turboréacteur (30) comportant au moins une pièce équipée d'une étiquette RFID (13), le système de contrôle (10, 20) étant **caractérisé en ce qu'**il comprend un dispositif interrogateur (111) équipé d'une antenne RFID (1111), le dispositif interrogateur étant agencé pour pouvoir communiquer avec l'étiquette RFID (13) par l'intermédiaire de l'antenne RFID, l'antenne RFID (1111) étant agencée pour pouvoir être introduite dans le compartiment de nacelle par l'ouverture d'inspection.

2. Système de contrôle selon la revendication 1 comprenant, en outre, une étiquette RFID de positionnement (12) disposée dans le compartiment de nacelle (1) de sorte à pouvoir être repérée par le dispositif interrogateur (111) lorsque l'antenne RFID (1111) est introduite dans le compartiment de nacelle (1) par l'ouverture d'inspection (3), le système de contrôle (10) étant configuré pour autoriser le dispositif interrogateur (111) à émettre un signal radiofréquence d'interrogation avec une puissance inférieure ou égale à un premier seuil lorsqu'il n'a pas repéré l'étiquette RFID de positionnement (12) et pour autoriser le dispositif interrogateur (111) à émettre un signal radiofréquence d'interrogation avec une puissance supérieure ou égale à un deuxième seuil lorsqu'il a repéré l'étiquette RFID de positionnement (12), le deuxième seuil étant strictement supérieur au premier seuil.

3. Système de contrôle selon la revendication 2, dans lequel le premier seuil est compris entre 50 mW et 2 W.

4. Système de contrôle selon l'une des revendications 2 et 3, dans lequel le deuxième seuil est déterminé de manière à ce que, en dehors du compartiment de nacelle (1), après atténuation par la paroi de nacelle (2), le signal radiofréquence d'interrogation présente une puissance inférieure ou égale au premier seuil.

5. Système de contrôle selon l'une des revendications 2 à 4, dans lequel le deuxième seuil est compris entre 2 W et 10 W.

6. Système de contrôle selon la revendication 1 comprenant, en outre, un marqueur de positionnement (22) et un capteur de positionnement (211) agencés de sorte que le marqueur de positionnement soit repéré par le capteur de positionnement lorsque l'antenne RFID (1111) est introduite dans le compartiment de nacelle (1) par l'ouverture d'inspection (3), le système de contrôle (20) étant configuré pour n'autoriser le dispositif interrogateur (111) à émettre un signal radiofréquence d'interrogation avec une puissance supérieure ou égale à un seuil prédéterminé que lorsque le capteur de positionnement (211) a repéré le marqueur de positionnement (22).

7. Système de contrôle selon la revendication 6, configuré pour n'autoriser le dispositif interrogateur (111) à émettre un signal radiofréquence d'interrogation que lorsque le capteur de positionnement (211) a repéré le marqueur de positionnement (22).

8. Système de contrôle selon la revendication 6 ou 7, dans lequel le marqueur de positionnement (22) est un code-barres ou un code 2D et le capteur de positionnement (211) est un lecteur optique apte à lire un code-barres ou un code 2D.

9. Système de contrôle selon la revendication 8, dans lequel le code-barres (22) ou le code 2D est disposé sur une surface externe de la paroi de nacelle (2), à proximité de l'ouverture d'inspection (3), le lecteur optique (211) étant disposé au voisinage de l'antenne RFID (1111).

10. Système de contrôle selon l'une des revendications précédentes, dans lequel l'étiquette RFID (13) contient une information relative à une identification de la pièce qu'elle équipe, une information relative à une durée de vie de ladite pièce et/ou une information relative à la présence d'une substance particulière dans ladite pièce.

11. Système de contrôle selon l'une des revendications précédentes dans lequel, le turboréacteur (30) comportant des zones autorisées, dans lesquelles l'antenne RFID (1111) est autorisée à être introduite, et des zones interdites (31), dans lesquelles l'antenne RFID n'est pas autorisée à être introduite, ladite antenne RFID (1111) présente une longueur inférieure à une distance séparant l'ouverture d'inspection de la zone interdite.

12. Procédé de contrôle de pièces d'un turboréacteur, le turboréacteur (30) étant logé dans un compartiment de nacelle (1) délimité par une paroi de nacelle (2), la paroi de nacelle comportant une ouverture d'inspection (3) apte à permettre le passage d'une sonde d'endoscope, le turboréacteur (30) comportant au moins une pièce équipée d'une étiquette RFID (13), le procédé de contrôle étant **caractérisé en ce qu'**il comprend :
▪ une étape d'introduction, dans l'ouverture d'inspection (3), d'une antenne RFID (1111) équipant un dispositif interrogateur (111) apte à communiquer avec l'étiquette RFID (13),
▪ une étape (44) de vérification que l'antenne RFID (1111) est introduite dans l'ouverture d'inspection (3), et
▪ si l'antenne RFID est effectivement introduite dans l'ouverture d'inspection, une étape (42) d'émission d'un signal radiofréquence d'interrogation avec une puissance supérieure ou égale à un seuil prédéterminé.

13. Moteur d'aéronef comportant une nacelle et un turboréacteur (30), la nacelle comprenant une paroi de nacelle (2) délimitant un compartiment de nacelle (1), le turboréacteur (30) étant logé dans le compartiment de nacelle (1) et comprenant au moins une pièce équipée d'une étiquette RFID (13), la paroi de nacelle comportant une pluralité d'ouvertures d'inspection (3) chacune apte à permettre le passage d'une sonde d'endoscope, au moins l'une des ouvertures d'inspection (3) étant en outre apte à permettre le passage d'une antenne RFID (1111) d'un système de contrôle (10, 20) selon l'une des revendications 1 à 11 et son introduction dans une zone autorisée, le moteur d'aéronef étant **caractérisé en ce qu'**il comporte, en outre, pour chaque ouverture d'inspection apte à permettre l'introduction de l'antenne RFID (1111) dans une zone autorisée, un repère visuel disposé sur la paroi de nacelle, à proximité de ladite ouverture d'inspection, le repère visuel indiquant à un opérateur que l'ouverture d'inspection est appropriée pour l'introduction de l'antenne RFID (1111).

14. Moteur d'aéronef selon la revendication 13, dans lequel au moins l'une des ouvertures d'inspection est apte à permettre l'introduction de l'antenne RFID (1111) dans une zone interdite, le moteur d'aéronef comportant, en outre, pour chaque ouverture d'inspection apte à permettre l'introduction de l'antenne RFID (1111) dans une zone interdite, un détrompeur agencé pour autoriser le passage d'une sonde d'endoscope et empêcher le passage de l'antenne RFID.

## Patentansprüche

1. System zur Kontrolle von Komponenten eines Turbostrahltriebwerks, wobei das Turbostrahltriebwerk (30) in einem Gondelraum (1) untergebracht ist, der von einer Gondelwand (2) begrenzt wird, wobei die Gondelwand eine Inspektionsöffnung (3) umfasst, die in der Lage ist, den Durchtritt einer Endoskopsonde zu ermöglichen, wobei das Turbostrahltriebwerk (30) mindestens eine Komponente umfasst, die mit einem RFID-Etikett (13) ausgerüstet ist, wobei das Kontrollsystem (10, 20) **dadurch gekennzeichnet ist, dass** es eine Abfragevorrichtung (111) umfasst, die mit einer RFID-Antenne (1111) ausgerüstet ist, wobei die Abfragevorrichtung so eingerichtet ist, dass sie mittels der RFID-Antenne mit dem RFID-Etikett (13) kommunizieren kann, wobei die RFID-Antenne (1111) so eingerichtet ist, dass sie durch die Inspektionsöffnung in den Gondelraum eingeführt werden kann.

2. Kontrollsystem nach Anspruch 1, das weiter ein RFID-Ortungsetikett (12) umfasst, das im Gondelraum (1) angeordnet ist, sodass es von der Abfragevorrichtung (111) aufgespürt werden kann, wenn die RFID-Antenne (1111) durch die Inspektionsöffnung (3) in den Gondelraum (1) eingeführt wird, wobei das Kontrollsystem (10) so ausgelegt ist, dass es der Abfragevorrichtung (111) erlaubt, ein Hochfrequenz-Abfragesignal mit einer Leistung zu senden, die kleiner oder gleich einer ersten Schwelle ist, wenn es das RFID-Ortungsetikett (12) nicht aufgespürt hat, und so, dass es der Abfragevorrichtung (111) erlaubt, ein Hochfrequenz-Abfragesignal mit einer Leistung zu senden, die größer oder gleich einer zweiten Schwelle ist, wenn sie das RFID-Ortungsetikett (12) aufgespürt hat, wobei die zweite Schwelle strikt größer ist als die erste Schwelle.

3. Kontrollsystem nach Anspruch 2, wobei die erste Schwelle im Bereich zwischen 50 mW und 2 W liegt.

4. Kontrollsystem nach einem der Ansprüche 2 und 3, wobei die zweite Schwelle so bestimmt wird, dass außerhalb des Gondelraums (1) nach Dämpfung durch die Gondelwand (2) das Hochfrequenz-Abfragesignal eine Leistung aufweist, die kleiner oder gleich der ersten Schwelle ist.

5. Kontrollsystem nach einem der Ansprüche 2 bis 4, wobei die zweite Schwelle im Bereich zwischen 2 W und 10 W liegt.

6. Kontrollsystem nach Anspruch 1, das weiter eine Ortungsmarkierung (22) und einen Ortungssensor (211) umfasst, die so eingerichtet sind, dass die Ortungsmarkierung vom Ortungssensor aufgespürt wird, wenn die RFID-Antenne (1111) durch die Inspektionsöffnung (3) in den Gondelraum (1) eingeführt wird, wobei das Kontrollsystem (20) so ausgelegt ist, dass es der Abfragevorrichtung (111) nur dann erlaubt, ein Hochfrequenz-Abfragesignal mit einer Leistung zu senden, die größer oder gleich einer vorbestimmten Schwelle ist, wenn der Ortungssensor (211) die Ortungsmarkierung (22) aufgespürt hat.

7. Kontrollsystem nach Anspruch 6, das so ausgelegt ist, dass es der Abfragevorrichtung (111) nur dann erlaubt, ein Hochfrequenz-Abfragesignal zu senden, wenn der Ortungssensor (211) die Ortungsmarkierung (22) aufgespürt hat.

8. Kontrollsystem nach Anspruch 6 oder 7, wobei es sich bei der Ortungsmarkierung (22) um einen Strichcode oder einen 2D-Code handelt, und es sich beim Ortungssensor (211) um einen optischen Leser handelt, der in der Lage ist, einen Strichcode oder einen 2D-Code zu lesen.

9. Kontrollsystem nach Anspruch 8, wobei der Strichcode (22) oder der 2D-Code auf einer Außenfläche der Gondelwand (2) in der Nähe der Inspektionsöffnung (3) angeordnet ist, wobei der optische Leser (211) in der Nähe der RFID-Antenne (1111) angeordnet ist.

10. Kontrollsystem nach einem der vorstehenden Ansprüche, wobei das RFID-Etikett (13) eine Information, die sich auf eine Identifizierung der mit ihr ausgerüsteten Komponente bezieht, eine Information, die sich auf eine Lebensdauer der Komponente bezieht, und/oder eine Information, die sich auf das Vorhandensein eines bestimmten Stoffes in der Komponente bezieht, enthält.

11. Kontrollsystem nach einem der vorstehenden Ansprüche, wobei das Turbostrahltriebwerk (30) erlaubte Zonen, in die die RFID-Antenne (1111) eingeführt werden darf, und verbotene Zonen (31) umfasst, in die die RFID-Antenne nicht eingeführt werden darf, wobei die RFID-Antenne (1111) eine Länge aufweist, die kleiner ist als eine Entfernung, die die Inspektionsöffnung von der verbotenen Zone trennt.

12. Verfahren zur Kontrolle von Komponenten eines Turbostrahltriebwerks, wobei das Turbostrahltriebwerk (30) in einem Gondelraum (1) untergebracht ist, der von einer Gondelwand (2) begrenzt wird, wobei die Gondelwand eine Inspektionsöffnung (3) umfasst, die in der Lage ist, den Durchtritt einer Endoskopsonde zu ermöglichen, wobei das Turbostrahltriebwerk (30) mindestens eine Komponente umfasst, die mit einem RFID-Etikett (13) ausgerüstet ist, wobei das Kontrollverfahren **dadurch gekennzeichnet ist, dass** es umfasst:
- einen Schritt des Einführens einer RFID-Antenne (1111), mit der eine Abfragevorrichtung (111), die in der Lage ist, mit dem RFID-Etikett (13) zu kommunizieren, ausgerüstet ist, in die Inspektionsöffnung (3),
- einen Schritt (44) des Verifizierens, dass die RFID-Antenne (1111) in die Inspektionsöffnung (3) eingeführt ist, und
- wenn die RFID-Antenne tatsächlich in die Inspektionsöffnung eingeführt ist, einen Schritt (42) des Sendens eines Hochfrequenz-Abfragesignals mit einer Leistung, die größer oder gleich einer vorbestimmten Schwelle ist.

13. Flugzeugmotor, der eine Gondel und ein Turbostrahltriebwerk (30) umfasst, wobei die Gondel eine Gondelwand (2) umfasst, die einen Gondelraum (1) begrenzt, wobei das Turbostrahltriebwerk (30) in dem Gondelraum (1) untergebracht ist und mindestens eine Komponente umfasst, die mit einem RFID-Etikett (13) ausgerüstet ist, wobei die Gondelwand eine Vielzahl von Inspektionsöffnungen (3) umfasst, die jeweils in der Lage sind, den Durchtritt einer Endoskopsonde zu ermöglichen, wobei mindestens eine der Inspektionsöffnungen (3) weiter in der Lage ist, den Durchtritt einer RFID-Antenne (1111) eines Kontrollsystems (10, 20) nach einem der Ansprüche 1 bis 11 und deren Einführen in eine erlaubte Zone zu ermöglichen, wobei der Flugzeugmotor **dadurch gekennzeichnet ist, dass** er weiter für jede Inspektionsöffnung, die in der Lage ist, das Einführen der RFID-Antenne (1111) in eine erlaubte Zone zu ermöglichen, ein an der Gondelwand in der Nähe der Inspektionsöffnung angeordnetes visuelles Zeichen umfasst, wobei das visuelle Zeichen einem Bediener anzeigt, dass die Inspektionsöffnung für das Einführen der RFID-Antenne (1111) geeignet ist.

14. Flugzeugmotor nach Anspruch 13, wobei mindestens eine der Inspektionsöffnungen in der Lage ist, das Einführen der RFID-Antenne (1111) in eine verbotene Zone zu ermöglichen, wobei der Flugzeugmotor weiter für jede Inspektionsöffnung, die in der Lage ist, das Einführen der RFID-Antenne (1111) in eine verbotene Zone zu ermöglichen, ein Unverwechselbarkeitsmerkmal umfasst, das so eingerichtet ist, dass es den Durchtritt einer Endoskopsonde erlaubt und den Durchtritt der RFID-Antenne verhindert.

## Claims

1. System for inspecting components of a turbojet engine, the turbojet engine (30) being housed in a nacelle compartment (1) delimited by a nacelle wall (2), the nacelle wall including an inspection opening (3) suitable for allowing passage of an endoscope probe, the turbojet engine (30) including at least one component equipped with an RFID tag (13), the inspection system (10, 20) being **characterized in that** it comprises an interrogator device (111) equipped with an RFID antenna (1111), the interrogator device being arranged to be able to communicate with the RFID tag (13) by means of the RFID antenna, the RFID antenna (1111) being arranged to be able to be introduced into the nacelle compartment through the inspection opening.

2. Inspection system according to claim 1, further comprising a positioning RFID tag (12) disposed in the nacelle compartment (1) so as to be able to be detected by the interrogator device (111) when the RFID antenna (1111) is introduced into the nacelle compartment (1) through the inspection opening (3), the inspection system (10) being configured to enable the interrogator device (111) to send a radio-frequency interrogation signal with a power below or equal to a first threshold when it has not detected the positioning RFID tag (12) and to enable the interrogator device (111) to send a radio-frequency interrogation signal with a power above or equal to the second threshold when it has detected the positioning RFID tag (12), the second threshold being strictly higherthan the first threshold.

3. Inspection system according to claim 2, wherein the first threshold is between 50 mW and 2 W.

4. Inspection system according to one of claims 2 and 3, wherein the second threshold is determined so that, outside the nacelle compartment (1), after attenuation by the nacelle wall (2), the radio-frequency interrogation signal has a power below or equal to the first threshold.

5. Inspection system according to one of claims 2 to 4, wherein the second threshold is between 2 W and 10 W.

6. Inspection system according to claim 1, further comprising a positioning marker (22) and a positioning sensor (211) both arranged so that the positioning marker is detected by the positioning sensor when the RFID antenna (1111) is introduced into the nacelle compartment (1) through the inspection opening (3), the inspection system (20) being configured so as to enable the interrogator device (111) to send a radio-frequency interrogation signal with a power above or equal to a predetermined threshold only when the positioning sensor (211) has detected the positioning marker (22).

7. Inspection system according to claim 6, configured to enable the interrogator device (111) to send a radio-frequency interrogation signal only when the positioning sensor (211) has detected the positioning marker (22).

8. Inspection system according to claim 6 or 7, wherein the positioning marker (22) is a bar code or a 2D code and the positioning sensor (211) is an optical reader able to read a bar code or a 2D code.

9. Inspection system according to claim 8, wherein the bar code (22) or the 2D code is disposed on an external surface of the nacelle wall (2), in proximity to the inspection opening (3), the optical reader (211) being disposed in the vicinity of the RFID antenna (1111).

10. Inspection system according to one of the preceding claims, wherein the RFID tag (13) contains information relating to the identification of the component that it equips, information relating to a service life of said component and/or information relating to the presence of a particular substance in said component.

11. Inspection system according to one of the preceding claims, wherein, the turbojet engine (30) including authorised zones wherein the RFID antenna (1111) is authorised to be introduced, and prohibited zones (31) wherein the RFID antenna is not authorised to be introduced, said RFID antenna (1111) has a length less than a distance separating the inspection opening from the prohibited zone.

12. Method for inspecting components of a turbojet engine, the turbojet engine (30) being housed in a nacelle compartment (1) delimited by a nacelle wall (2), the nacelle wall including an inspection opening (3) able to allow passage of an endoscope probe, the turbojet engine (30) including at least one component equipped with an RFID tag (13), the inspection method being **characterized in that** it comprises:
▪ a step of introducing, into the inspection opening (3), an RFID antenna (1111) equipping an interrogator device (111) able to communicate with the RFID tag (13),
▪ a step (44) of verifying that the RFID antenna (1111) is introduced into the inspection opening (3), and
▪ if the RFID antenna is effectively introduced into the inspection opening, a step (42) of sending a radio-frequency interrogation signal with a power above or equal to a predetermined threshold.

13. Aircraft engine including a nacelle and a turbojet engine (30), the nacelle comprising a nacelle wall (2) delimiting a nacelle compartment (1), the turbojet engine (30) being housed in the nacelle compartment (1) and comprising at least one component equipped with an RFID tag (13), the nacelle wall including a plurality of inspection openings (3) each suitable for allowing passage of an endoscope probe, at least one of the inspection openings (3) furthermore being suitable to allow passage of an RFID antenna (1111) of an inspection system (10, 20) according to one of claims 1 to 11 and its introduction into an authorised zone, the aircraft engine being **characterized in that** it furthermore includes, for each inspection opening suitable for allowing the introduction of the RFID antenna (1111) into an authorised zone, a visual mark disposed on the nacelle wall, in proximity to said inspection opening, the visual mark indicating to an operator that the inspection opening is appropriate for introducing the RFID antenna (1111).

14. Aircraft engine according to claim 13, wherein at least one of the inspection openings is suitable for allowing the introduction of the RFID antenna (1111) into a prohibited zone, the aircraft engine furthermore including, for each inspection opening suitable for allowing the introduction of the RFID antenna (1111) into a prohibited zone, a foolproof device arranged to allow passage of an endoscope probe and to prevent passage of the RFID antenna.
